(19) Europäisches Patentamt
European Patent Office
Office européen des brevets

(11) **EP 4 723 502 A1**

(12) **EUROPEAN PATENT APPLICATION**
published in accordance with Art. 153(4) EPC

(43) Date of publication:
**08.04.2026 Bulletin 2026/15**

(21) Application number: **23938753.3**

(22) Date of filing: **26.05.2023**

(51) International Patent Classification (IPC):
**H04B 7/0413** (2017.01)

(52) Cooperative Patent Classification (CPC):
**H04B 7/0413**

(86) International application number:
**PCT/CN2023/096695**

(87) International publication number:
**WO 2024/243754 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **CHI, Liangang**
  **Beijing 100085 (CN)**
• **DUAN, Gaoming**
  **Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR DETERMINING SERVICE TRANSMIT AND RECEIVE POINT**

(57)     Disclosed in the embodiments of the present disclosure are a method and apparatus for determining a service transmit and receive point, which can be applied to the technical field of communications. The method, which is executed by a terminal device, comprises: measuring a reference signal in a reference signal group sent by a network device, and determining a measurement result, wherein the measurement result comprises the time of arrival and/or delay spread of the reference signal in the reference signal group; sending the measurement result to the network device; and receiving indication information sent by the network device, wherein the indication information is used for indicating a service transmit and receive point (TRP). Thus, a network device can select an appropriate TRP for a terminal device, thereby improving the performance of a MIMO system.

determining a measurement result by measuring a reference signal in a reference signal set transmitted by a network device, wherein the measurement result comprises an arrival time and/or a delay spread of the reference signal in the reference signal set — 201

transmitting the measurement result to the network device — 202

receiving indication information transmitted by the network device, wherein the indication information indicates a serving TRP — 203

FIG. 2

EP 4 723 502 A1

Description

TECHNICAL FIELD

The present disclosure relates to a field of wireless communication technologies, and in particular, to a method and an apparatus for determining a serving transmit and receive point (TRP).

BACKGROUND

In the distributed multiple-input multiple-output (MIMO) technology of a wireless communication system, a plurality of transmit and receive points (TRPs) may provide a service for one terminal.

SUMMARY

Embodiments of the present disclosure provide a method and an apparatus for determining a serving transmit and receive point (TRP). A terminal first measures a reference signal in a reference signal set transmitted by a network device, and determines an arrival time and/or a delay spread of the reference signal in the reference signal set. Then, the terminal transmits a measurement result to the network device, and receives the serving TRP indicated by the network device. Therefore, the network device may select an appropriate TRP for the terminal, which improves a performance of a multiple-input multiple-output (MIMO) system.

According to a first aspect, the embodiments of the present disclosure provide a method for determining a serving TRP. The method is performed by a terminal and includes: determining a measurement result by measuring a reference signal in a reference signal set transmitted by a network device, in which the measurement result includes an arrival time and/or a delay spread of the reference signal in the reference signal set; transmitting the measurement result to the network device; and receiving indication information transmitted by the network device, in which the indication information indicates the serving TRP.

According to a second aspect, the embodiments of the present disclosure provide a method for determining a serving TRP. The method is performed by a network device and includes: receiving a measurement result of a reference signal set associated with each of candidate TRPs transmitted by a terminal, in which the measurement result includes an arrival time and/or a delay spread of a reference signal in the reference signal set; determining the serving TRP from the candidate TRPs based on the measurement result; and transmitting indication information to the terminal, in which the indication information indicates the serving TRP.

According to a third aspect, the embodiments of the present disclosure provide a communication device. The communication device has some or all of functions of the terminal in the method in the first aspect above, for example, the communication device may have functions in some or all of the embodiments of the present disclosure or may have functions for independently implementing any one of the embodiments of the present disclosure. The functions may be realized by hardware or by software which is executed by hardware. The hardware or software includes one or more units or modules corresponding to the above functions.

In one implementation, a structure of the communication device may include a transceiver module and a processing module. The processing module is configured to support the communication device to perform corresponding functions in the above method. The transceiver module is configured to support communication between the communication device and other devices. The communication device may further include a storage module. The storage module is configured to be coupled to the transceiver module and the processing module, and stores necessary computer programs and data for the communication device.

In one implementation, the communication device includes: a processing module, configured to determine a measurement result by measuring a reference signal in a reference signal set transmitted by a network device, in which the measurement result includes an arrival time and/or a delay spread of the reference signal in the reference signal set; a transceiver module, further configured to transmit the measurement result to the network device; and the transceiver module, further configured to receive indication information transmitted by the network device, in which the indication information indicates the serving TRP.

According to a fourth aspect, the embodiments of the present disclosure provide another communication device. The communication device has some or all of functions of the network device in the method in the second aspect above, for example, the communication device may have functions in some or all of the embodiments of the present disclosure or may have functions for independently implementing any one of the embodiments of the present disclosure. The functions may be realized by hardware or by software which is executed by hardware. The hardware or software includes one or more units or modules corresponding to the above functions.

In one implementation, a structure of the communication device may include a transceiver module and a processing module. The processing module is configured to support the communication device to perform corresponding functions in the above methods. The transceiver module is configured to support communication between the communication device and other devices. The communication device may also include a storage module. The storage module is configured to be coupled to the transceiver module and the processing module, and stores necessary computer programs and data for the communication device.

In one implementation, the communication device includes: a transceiver module, configured to receive a measurement result of a reference signal set associated with each of candidate TRPs transmitted by a terminal, in which the measurement result includes an arrival time and/or a delay spread of a reference signal in the reference signal set; a processing module, configured to determine the serving TRP from the candidate TRPs based on the measurement result; and the transceiver module, further configured to transmit indication information to the terminal, in which the indication information indicates the serving TRP.

According to a fifth aspect, the embodiments of the present disclosure provide a communication device including a processor. When a computer program in a memory is called by the processor, the method in the first aspect is implemented.

According to a sixth aspect, the embodiments of the present disclosure provide a communication device including a processor. When a computer program in a memory is called by the processor, the method in the second aspect is implemented.

According to a seventh aspect, the embodiments of the present disclosure provide a communication device, including a processor and a memory for storing a computer program. When the computer program stored in the memory is executed by the processor, the communication device is caused to implement the method in the first aspect.

According to an eighth aspect, the embodiments of the present disclosure provide a communication device, including a processor and a memory for storing a computer program. When the computer program stored in the memory is executed by the processor, the communication device is caused to implement the method in the second aspect.

According to a ninth aspect, the embodiments of the present disclosure provide a communication device, including a processor and an interface circuit for receiving code instructions and transmitting the code instructions to the processor, in which the processor is configured to run the code instructions to cause the communication device to implement the method in the first aspect.

According to a tenth aspect, the embodiments of the present disclosure provide a communication device, including a processor and an interface circuit for receiving code instructions and transmitting the code instructions to the processor, in which the processor is configured to run the code instructions to cause the communication device to implement the method in the second aspect.

According to an eleventh aspect, the embodiments of the present disclosure provide a communication system, in which the system includes the communication device in the third aspect and the communication device in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect, the embodiments of the present disclosure provide a computer-readable storage medium for storing instructions used by a receiving end. When the instructions are executed, the receiving end is caused to implement the method in the first aspect.

According to a thirteenth aspect, the embodiments of the present disclosure provide a computer-readable storage medium for storing instructions used by a transmitting end. When the instructions are executed, the transmitting end is caused to implement the method in the second aspect.

According to a fourteenth aspect, the embodiments of the present disclosure provide a computer program product including a computer program. When the computer program is running on a computer, the computer is caused to implement the method in the first aspect.

According to a fifteenth aspect, the embodiments of the present disclosure provide a computer program product including a computer program. When the computer program is running on a computer, the computer is caused to implement the method in the second aspect.

According to a sixteenth aspect, the embodiments of the present disclosure provide a chip system, including at least one processor and at least one interface configured to support the terminal to perform the functions in the first aspect, for example, at least one of determining or processing data and information in the above method. In one possible design, the chip system also includes a memory for saving computer programs and data necessary for the receiving end. The chip system may include a chip, or a chip and other discrete devices.

According to a seventeenth aspect, the embodiments of the present disclosure provide a chip system, including at least one processor and at least one interface configured to support the network device to perform the functions in the second aspect, for example, at least one of determining or processing data and information in the above method. In one possible design, the chip system also includes a memory for saving computer programs and data necessary for the transmitting end. The chip system may include a chip, or a chip and other discrete devices.

According to an eighteenth aspect, the embodiments of the present disclosure provide a computer program. When the computer program is run on a computer, the computer is caused to implement the method in the first aspect.

According to a nineteenth aspect, the embodiments of the present disclosure provide a computer program. When the computer program is run on a computer, the computer is caused to implement the method in the second aspect.

## BRIEF DESCRIPTION OF THE DRAWINGS

In order to more clearly illustrate the technical solutions in the embodiments of the disclosure or the background, the accompanying drawings to be used in the embodiments of the disclosure or the background are described below.

FIG. 1 is a schematic diagram of an architecture of a communication system according to the present disclosure.
FIG. 2 is a flowchart of a method for determining a serving TRP according to an embodiment of the present disclosure.
FIG. 3 is a schematic diagram of a reference signal arriving at a terminal via different paths according to an embodiment of the present disclosure.
FIG. 4 is a schematic diagram of a measurement result of a reference signal set according to an embodiment of the present disclosure.
FIG. 5 is a flowchart of another method for determining a serving TRP according to an embodiment of the present disclosure.
FIG. 6 is a flowchart of another method for determining a serving TRP according to an embodiment of the present disclosure.
FIG. 7 is a block diagram of a communication device according to an embodiment of the present disclosure.
FIG. 8 is a block diagram of another communication device according to an embodiment of the present disclosure.
FIG. 9 is a block diagram of a chip according to an embodiment of the present disclosure.

## DETAILED DESCRIPTION

To facilitate understanding of the technical solutions of the present disclosure, some terms involved in the embodiments of the present disclosure are briefly introduced below.

### 1. Radio Resource Control (RRC)

A terminal and a network device communicate with each other via a wireless channel and exchange a large amount of information. Therefore, a control mechanism is needed for both parties to exchange configuration information and reach an agreement. The control mechanism is called RRC, that is, radio resource control. It may be understood as a common language for communication between a user equipment (UE) and the network device. This language enables the network device and the UE to cooperate in perfect harmony.

### 2. Media Access Control (MAC) Control Element (CE)

MAC CE is a lower sub-layer of a data link layer, and provides addressing and media access control, which enables different network devices or nodes on a network to communicate with each other on a shared medium without conflicting with each other.

### 3. Downlink Control Information (DCI)

DCI, transmitted by the network device to the terminal and carried by a physical downlink control channel (PDCCH), includes uplink and downlink resource allocation, hybrid automatic repeat request (HARQ) information, power control, etc.

### 4. Quasi Co-Location (QCL)

Antenna port QCL is a channel state assumption between antenna ports. If there is a QCL relationship between two antenna ports, large-scale channel properties of one antenna port may be inferred from large-scale channel large-scale channel properties of the other antenna port.

### 5. Cyclic Prefix (CP)

CP refers to a prefix of a symbol, whose main function is to reduce inter-symbol interference.

### 6. Transmit and Receive Point (TRP)

TRP is equivalent to a traditional base station. However, in some cases, one cell may be covered not by one TRP, but jointly covered by a plurality of TRPs, thus increasing a coverage radius of the cell and greatly reducing frequent handovers of the terminal within the cell.

To better understand the method and apparatus for determining a serving TRP disclosed in the embodiments of the present disclosure, a communication system applicable to the embodiments of the present disclosure is described below.

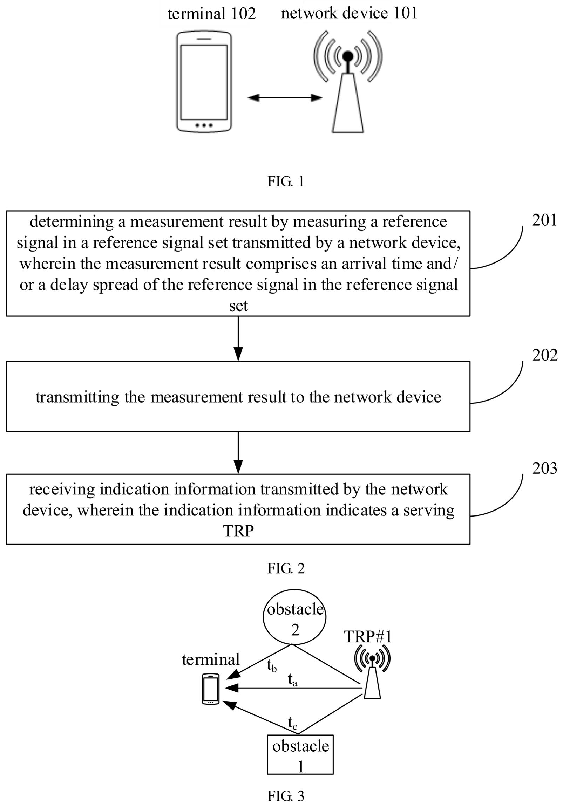

Refer to FIG. 1, FIG. 1 is a schematic diagram of an architecture of a communication system according to the present disclosure. The communication system may include, but is not limited to, one network device and one terminal. A number and forms of devices shown in FIG. 1 are for illustration only and do not limit the embodiments of the present disclosure. In a practical application, there may be two or more network devices and two or more terminals. The communication system shown in FIG. 1 may include one network device 101 and one terminal 102.

It needs to be noted that the technical solutions of embodiments of the present disclosure may be applied to various communication systems, for example, a long term evolution (LTE) system, a 5th generation (5G) mobile communication system, a 5G new radio (NR) system, or other new future mobile communication systems.

The network device 101 in the embodiments of the present disclosure is an entity on a network side for transmitting or receiving signals, and is a device for communicating with the terminal. The network device 101 may be a base transceiver station (BTS) in a global system for mobile communications (GSM) system or a code division multiple access (CDMA) system, or may be a NodeB (NB) in a wideband code division multiple access (WCDMA) system, or may be an evolved NodeB (eNB or eNodeB) in the LTE system, or may be a wireless controller in a cloud radio access network (CRAN) scenario, or may be a radio network controller (RNC), a base station controller (BSC), a home base station (for example, home evolved nodeB, or home nodeB (HNB)), a baseband unit (BBU), or the network side device may be a relay station, an access point, a vehicle-mounted device, a wearable device, and a network side device in a 5G network or a network side device in a future evolved public land mobile network (PLMN) network, etc., or may be an access point (AP) in a wireless local area network (WLAN), a wireless relay node, a wireless backhaul node, a transmit point (TP), or a transmit and receive point (TRP), etc., or may be a gNB or a TRP or a TP in an NR system, or may be one or a group (including a plurality of antenna panels) of antenna panels of a base station in the 5G system, or may further be a network node constituting a gNB or a TP such as a baseband unit (BBU), or a distributed unit (DU), etc. The embodiments of the present disclosure do not limit a specific technology and a specific device form used by the network device. The network device according to the embodiments of the disclosure may be composed of a central unit (CU) and distributed units (DUs). The CU may also be referred to as a control unit. The use of CU-DU structure allows dividing the network device, such as protocol layers of the network device, such that functions of some protocol layers are placed in the CU for centralized control, and functions of some or all of the remaining protocol layers are distributed in the DUs, and the DUs are centrally controlled by the CU.

The terminal 102 in the embodiments of the present disclosure may be a device that provides voice/-data connectivity to a user, for example, a handheld device with a wireless connection function, a vehicle-mounted device, etc. The terminal may be a mobile phone, a tablet computer, a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with a wireless communication function, a computing device, or other processing device connected to a wireless modem, a vehicle-mounted device, a wearable device, a terminal in the 5G network, or a terminal in a future evolved PLMN, and/or any other suitable device for communicating in a wireless communication system, which is not limited in the embodiments of the present disclosure.

The wearable device may also be called a wearable smart device, which is a general term for intelligent design of daily wear and development of wearable devices by applying the wearable technology, such as glasses, watches, clothing, and shoes. The wearable device is a portable device that is worn directly on a body or integrated into clothing or accessories of a user. The wearable device is not only a hardware device, but also achieves powerful functions via software support, data interaction, and cloud interaction. In a broad sense, the wearable smart device includes devices with comprehensive functions, a large size, and may achieve complete or partial functions without a smartphone, for example, smart watches or smart glasses, etc., and devices focused only on a certain type of application function and needed to be used in combination with other devices such as a smartphone, for example, various smart bracelets and smart jewelry for physical sign monitoring.

Furthermore, in the embodiments of the present disclosure, the terminal 102 may also be a terminal in an Internet of Things (IoT) system. IoT is an important part of the development of future information technology. Its main technical characteristic is to connect objects to the network via the communication technology, thus achieving an intelligent network for human-machine interconnection and thing-thing interconnection.

Furthermore, in the embodiments of the present disclosure, the terminal 102 may also include a smart printer, a train detector, a gas station sensor, etc., whose main functions include collecting data (for some terminals), receiving control information and downlink data from the network side device, and transmitting electromagnetic waves to transmit uplink data to the network side device.

It needs to be noted that the technical solutions in embodiments of the disclosure may be applied to various communication systems, for example, an LTE system, a 5G mobile communication system, a 5G NR system, or other new future mobile communication systems.

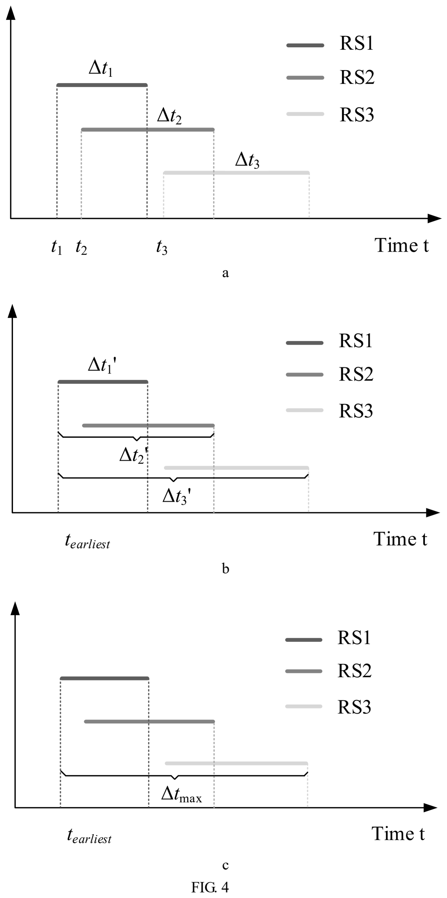

The terminal 102 provided in the embodiments of the present disclosure may implement the method shown in the embodiments of FIG. 2, and the network device 101 may implement the method shown in the embodiments of FIG. 4.

It may be understood that the communication system in the embodiments of the present disclosure is intended to illustrate the technical solution in the embodiments of the present disclosure more clearly, and does not constitute a limitation of the technical solution in the embodiments of the present disclosure. Those skilled in the art may know that the technical solutions in the embodiments of the present disclosure are equally applicable to similar technical problems, with the evolution of system architecture and the emergence of a new service scene.

Furthermore, following points are explained to facilitate understanding of the embodiments of the present disclosure.

First, in the present disclosure, terms like first, second, and various numerical labels are used only for distinguishing for the convenience of description, and are not intended to limit the scope of the embodiments of the present disclosure, for example, distinguishing different information, different terminals, etc.

Second, "protocol" involved in the embodiments of the present disclosure may refer to a standard protocol in the field of communication, for example, an LTE protocol, an NR protocol, and a related protocol applied in a future communication system, which are not limited in the present disclosure.

Third, a plurality of implementations are listed in embodiments of the present disclosure to clearly illustrate the technical solutions of the embodiments of the present disclosure. Of course, those skilled in the art may understand that the plurality of implementations in embodiments of the present disclosure may be executed independently or in combination with one or more of other embodiments in the present disclosure, or independently or in combination with some methods from other related arts, which is not limited in the embodiments of the present disclosure.

Currently, in an application scenario such as an extended reality (XR) service (for example, virtual reality (VR), augmented reality (AR)), vehicle to everything (V2X), and Internet of Things (IoT), communication with an ultra-high speed, an ultra-low latency, and an ultra-large bandwidth have become the norm. To meet this requirement, distributed multiple-input multiple-output (MIMO) has evolved from a traditional classic MIMO technology. A plurality of TRPs serve one UE, which ensures better signal quality and meets a high-speed and high-capacity service demand of the UE. Based on this purpose, measuring an arrival time and a delay spread of reference signals from different TRPs at the UE assists the network device in solving a problem of selecting and indicating a serving TRP in a multi-TRP based transmission system. The present disclosure provides a method for enabling the network device to determine the serving TRP in the multi-TRP based transmission system.

In the present disclosure, the terminal first measures a reference signal in a reference signal set transmitted by the network device, and determines an arrival time and/or a delay spread of the reference signal in the reference signal set. Then, the terminal transmits a measurement result to the network device, and receives the serving TRP indicated by the network device. Therefore, the network device may select an appropriate TRP for the terminal, which improves the performance of the MIMO system.

It needs to be noted that the network device in the present disclosure may be any device on the network side in a MIMO architecture that provides a communication service decision or a respective functional service for the terminal, for example, a CU, or a core network device, etc. A corresponding TRP is an access network device on the network side, or a remote radio unit (RRU) in an access network device. For convenience of description, following embodiments of the present disclosure uniformly use the network device as the CU, the TRP, or the RRU for illustration. In the present disclosure, the reference signal transmitted by the network device is transmitted to the terminal via the TRP. Correspondingly, the measurement result returned by the terminal is also transmitted back to the network device via the TRP. Then, the network device may select the serving TRP for the terminal based on the measurement result.

The method and the apparatus for determining a serving TRP provided by the present disclosure are described in detail below with reference to accompanying drawings.

Refer to FIG. 2, FIG. 2 is a flowchart of a method for determining a serving TRP according to an embodiment of the present disclosure. As shown in FIG. 2, the method is applied to a terminal. The method may include but is not limited to following steps at S201 to S203.

At S201, a measurement result is determined by measuring a reference signal in a reference signal set transmitted by a network device, in which the measurement result includes an arrival time and/or a delay spread of the reference signal in the reference signal set.

The reference signal set is a combination of reference signals, where each reference signal is associated with each of the candidate TRPs. The delay spread characterizes a time difference between a same reference signal arriving at the terminal via a non-earliest path and via an earliest path, respectively. The earliest path is a shortest path via which the reference signal may reach the terminal. A maximum delay spread is a time difference between a same reference signal arriving at the terminal via a longest transmission path and via the earliest path, respectively.

For example, FIG. 3 is a schematic diagram of a reference signal arriving at a terminal via different paths. As shown in FIG. 3, a reference signal associated with TRP#1 may reach the terminal via three different paths. A path on which the reference signal may travel directly to the terminal may be called the shortest path or the earliest path. As shown in FIG. 3, a time taken for the reference signal to arrive the terminal via the shortest path is $t_a$, a transmission duration for the reference signal arriving at the terminal after passing obstacle 1 (reflection, scattering, or refraction) is $t_c$, and a transmission duration for the reference signal arriving at the terminal after passing obstacle 2 (reflection, scattering, or refraction) is $t_b$. Since a transmission path via obstacle 1 is longer than a transmission path via obstacle 2, it may be seen that $t_c > t_b > t_a$. Thus, a delay spread of the reference signal associated with TRP#1 includes $\Delta t_{ba} = t_b - t_a$, $\Delta t_{ca} = t_c - t_a$, and since $t_c > t_b$, it may be seen that $\Delta t_{ca} > \Delta t_{ba}$, that is, a maximum delay spread corresponding to the reference signal associated with TRP#1 is $\Delta t_{ca}$.

In some possible implementations, the measurement result may include an earliest path arrival time and a maximum delay spread of each reference signal.

As shown in FIG. 4, FIG. 4 is a schematic diagram of a measurement result of a reference signal set according to an embodiment of the present disclosure.

As shown in FIG. 4a), RS1, RS2, RS3 in the figure represents reference signal 1, reference signal 2, and reference signal 3, respectively. t1, t2, t3 represents earliest path arrival times of RS1, RS2, RS3, respectively. $\Delta t_1$, $\Delta t_2$, and $\Delta t_3$ represents maximum delay spreads of RS1, RS2, RS3, respectively. A maximum delay spread of an i-th reference signal is: $\Delta t_i = t_{i,latest} - t_{i,earliest}$, in which $t_{i,latest}$ represents a latest path arrival time of the i-th reference signal, and $t_{i,earliest}$ represents an earliest path arrival time of the i-th reference signal. For example, a maximum delay spread of RS2 is: $\Delta t_2 = t_{2,latest} - t_{2,earliest}$.

In some possible implementations, the measurement result may further include a delay spread of each reference signal relative to an earliest path arrival time of the reference signal set.

As shown in FIG. 4b), RS1, RS2, and RS3 in the figure represent reference signal 1, reference signal 2, and reference signal 3, respectively. $t_{earliest}$ represents an earliest path arrival time among all reference signals.

$\Delta t'_1$, $\Delta t'_2$, and $\Delta t'_3$ represents delay spreads of RS1, RS2, RS3 relative to an earliest arriving reference signal, respectively. A calculation formula for a delay spread of the i-th signal relative to the earliest arriving reference signal is: $\Delta t'_i = t_{i,latest} - t_{earliest}$. $t_{i,latest}$ represents a latest arrival time of the i-th reference signal. For example, a delay spread formula for a delay spread of RS2 relative to the earliest arriving reference signal is:

$$\Delta t'_2 = t_{2,latest} - t_{earliest}.$$

In some possible implementations, the measurement result may further include a comprehensive maximum delay spread of the reference signal set.

As shown in FIG. 4c), RS1, RS2, and RS3 in the figure represent reference signal 1, reference signal 2, and reference signal 3, respectively. $\Delta t_{max}$ is the comprehensive maximum delay spread of all reference signals, that is, a time difference between a latest arriving path and an earliest arriving path. A calculation formula for the comprehensive maximum delay spread of all reference signals is: $\Delta t_{max} = t_{latest} - t_{earliest}$, where $t_{latest}$ represents a latest path arrival time among all reference signals, and $t_{earliest}$ represents an earliest path arrival time among all reference signals. For example, a calculation formula for the comprehensive reference maximum delay spread of RS1, RS2, and RS3 is: $\Delta t_{max} = t_{latest} - t_{earliest}$.

At S202, the measurement result is transmitted to the network device.

In one implementation of the present disclosure, the terminal transmits the earliest path arrival time and the maximum delay spread of each reference signal in the reference signal set to the network device.

In some possible implementations, the terminal may transmit the measurement result to the network device via any candidate TRP.

At S203, indication information transmitted by the network device is received, in which the indication information indicates the serving TRP.

In some possible implementations, the terminal may receive the indication information transmitted by the network device via an RRC message, or may receive the indication information transmitted by the network device via an MAC CE, or, may further receive the indication information transmitted by the network device via DCI, which is not limited in the present disclosure.

In some possible implementations, the indication information may include a TRP identifier, so that the terminal may directly determine the serving TRP based on the TRP identifier in the indication information.

In some possible implementations, the indication information transmitted by the network device and received by the terminal may further be a QCL identifier group. Usually, one TRP has a plurality of antenna ports, and the network device typically configures a QCL relationship for antenna ports that are located at a same or similar position. Thus, the network device may indirectly indicate the serving TRP identifier by indicating a QCL identifier group to the terminal. After receiving the QCL identifier group, the terminal may determine the serving TRP based on a relationship between the QCL identifier group and the TRP.

For example, the indication information transmitted by the network device and received by the terminal includes QCL identifier group 1, in which QCL identifier group 1 includes QCL#0, QCL#1, and QCL#2. Then, the terminal, by consulting a mapping relationship between a QCL identifier and the antenna port, determines that QCL#0 corresponds to antenna port #0 and antenna port #1, QCL#1 corresponds to antenna port #2 and antenna port #3, QCL#2 corresponds to antenna port #4 and antenna port #5, and simultaneously, antenna port #0 to antenna port #5 are all antenna ports in TRP#0. Then the terminal may determine that the serving TRP is TRP#0.

In some possible implementations, the indication information transmitted by the network device and received by the terminal may also be a reference signal identifier group, in which the reference signal identifier group includes identifiers of one or more reference signals. Then, the terminal may determine the serving TRP according to a correspondence between a reference signal identifier and a TRP.

For example, the indication information transmitted by the network device and received by the terminal includes reference signal identifier group 1, in which reference signal identifier group 1 includes reference signal #1 and reference signal #2. Then, the terminal, by consulting a mapping relationship between the reference signal identifier and the TRP, determines that reference signal #1 is associated with TRP#1, and reference signal #2 is associated with TRP#2. Then the terminal may determine that a serving TRP group is TRP#1 and TRP#2.

In some possible implementations, the terminal may receive the indication information transmitted by the network device via any TRP, in which any TRP is a serving TRP determined by the network device.

In summary, the terminal first measures the reference signal in the reference signal set transmitted by the network device, and determines the arrival time and/or the delay spread of the reference signal in the reference signal set. Then, the terminal transmits the measurement result to the network device, and receives indication information indicating the serving TRP sent by the network device. Therefore, the network device may select an appropriate TRP for the terminal, which improves a performance of the MIMO system.

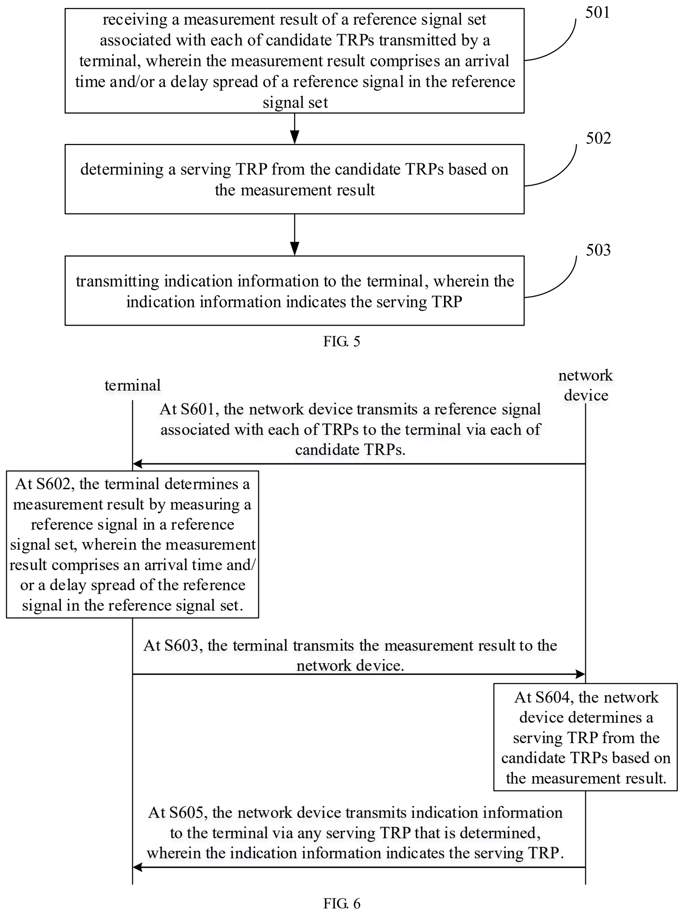

Refer to FIG. 5, FIG. 5 is a flowchart of a method for determining a serving TRP according to an embodiment of the present disclosure. As shown in FIG. 4, the method is applied to a network device. The method may include but is not limited to following steps at S501 to S503.

At S501, a measurement result of a reference signal set associated with each of candidate TRPs transmitted by a terminal is received, in which the measurement result includes an arrival time and/or a delay spread of a reference signal in the reference signal set.

The reference signal set is a combination of reference signals, where each reference signal is associated with each of the candidate TRPs. The delay spread characterizes a time difference between a same reference signal arriving at the terminal via a non-earliest path and via an earliest path. The earliest path is a shortest path via which the reference signal may reach the terminal. A maximum delay spread is a time difference between a same reference signal arriving at the terminal via a longest transmission path and via the earliest path.

Refer to FIG. 3, FIG. 3 is a schematic diagram of a reference signal arriving at a terminal via different paths. As shown in FIG. 3, a reference signal associated with TRP#1 may reach the terminal via three different paths. A path on which the reference signal may travel directly to the terminal may be called the shortest path or the earliest path. As shown in FIG. 3, a time taken for the reference signal to arrive the terminal via the shortest path is $t_a$, a transmission time duration for the reference signal arriving at the terminal after passing obstacle 1 (reflection, scattering, or refraction) is $t_c$, and a transmission duration for the reference signal arriving at the terminal after passing obstacle 2 (reflection, scattering, or refraction) is $t_b$. Since a transmission path via obstacle 1 is longer than a transmission path via obstacle 2, it may be seen that $t_c > t_b > t_a$. Thus, a delay spread of the reference signal associated with TRP#1 includes $\Delta t_{ba} = t_b - t_a$, $\Delta t_{ca} = t_c - t_a$, and since $t_c > t_b$, it may be seen that $\Delta t_{ca} > \Delta t_{ba}$, that is, a maximum delay spread corresponding to the reference signal associated with TRP#1 is $\Delta t_{ca}$.

In some possible implementations, the measurement result may include an earliest path arrival time and a maximum delay spread of each reference signal.

As shown in FIG. 4a), RS1, RS2, RS3 in the figure represents reference signal 1, reference signal 2, and reference signal 3, respectively. t1, t2, t3 represents earliest path arrival times of RS1, RS2, RS3, respectively. $\Delta t_1$, $\Delta t_2$, and $\Delta t_3$ represents maximum delay spreads of RS1, RS2, RS3, respectively. A maximum delay spread of an i-th reference signal is: $\Delta t_i = t_{i,latest} - t_{i,earliest}$, in which $t_{i,latest}$ represents a latest path arrival time of the i-th reference signal, and $t_{i,earliest}$ represents an earliest path arrival time of the i-th reference signal. For example, a maximum delay spread of RS2 is:

$$\Delta t_2 = t_{2,latest} - t_{2,earliest}.$$

In some possible implementations, the measurement result may further include a delay spread of each reference signal relative to an earliest path arrival time of the reference signal set.

As shown in FIG. 4b), RS1, RS2, and RS3 in the figure represent reference signal 1, reference signal 2, and reference signal 3, respectively. $t_{earliest}$ represents an earliest path arrival time among all reference signals. $\Delta t_1'$, $\Delta t_2'$, and $\Delta t_3'$ represent delay spreads of RS1, RS2, and RS3 relative to an earliest arriving reference signal, respectively. A calculation formula for a delay spread of the i-th signal relative to the earliest arriving reference signal is: $\Delta t_i' = t_{i,latest} - t_{earliest}$. $t_{i,latest}$ represents a latest arrival time of the i-th reference signal. For example, a delay spread formula for a delay spread of RS2 relative to the earliest arriving reference signal is:

$$\Delta t_2' = t_{2,latest} - t_{earliest}.$$

In some possible implementations, the measurement result may further include a comprehensive maximum delay spread of the reference signal set.

As shown in FIG. 4c), RS1, RS2, and RS3 in the figure represent reference signal 1, reference signal 2, and reference signal 3, respectively. $\Delta t_{max}$ is the comprehensive maximum delay spread of all reference signals, that is, a time difference between a latest arriving path and an earliest arriving path. A calculation formula for the comprehensive maximum delay spread of all reference signals is: $\Delta t_{max} = t_{latest} - t_{earliest}$, in which $t_{latest}$ represents a latest path arrival time among all reference

signals, and $t_{earliest}$ represents an earliest path arrival time among all reference signals. For example, a calculation formula for the comprehensive reference maximum delay spread of RS1, RS2, and RS3 is:

$$\Delta t_{max} = t_{latest} - t_{earliest}.$$

In some possible implementations, the network device may receive the measurement result transmitted by the terminal via any candidate TRP.

It needs to be noted that before receiving the measurement result transmitted by the terminal, the network device first needs to transmit a reference signal associated with each TRP to the terminal via each of the candidate TRPs.

At S502, the serving TRP is determined from the candidate TRPs based on the measurement result.

In the present disclosure, the network device may filter the serving TRP from the candidate TRPs according to a preset filtering condition of the candidate TRPs and the measurement result; or, the network device may further filter the serving TRP from the candidate TRPs based on a protocol agreement and the measurement result; or, the network device may further filter the serving TRP from the candidate TRPs according to the measurement result based on a current system requirement, which is not limited in the present disclosure.

For example, the filtering condition of the candidate TRPs includes that the comprehensive maximum delay spread $\Delta t_{max}$ of the reference signal set is less than a CP length. Then, after obtaining the measurement result, the network device may determine the comprehensive maximum delay spread $\Delta t_{max}$ of the reference signal set according to the measurement result. If the comprehensive maximum delay spread $\Delta t_{max}$ of the reference signal set is less than the CP length, one or more TRPs may be arbitrarily selected from the candidate TRPs as the serving TRP.

The CP length may be set according to factors such as a specific communication requirement and a system design, or may be set according to historical communication data of a MIMO system, which is not limited in the present disclosure.

In some possible implementations, if the measurement result includes the comprehensive maximum delay spread $\Delta t_{max}$ of the reference signal set, the network device may directly obtain the comprehensive maximum delay spread $\Delta t_{max}$ of the reference signal set from the measurement result.

In some possible implementations, if the measurement result includes the earliest path arrival time and the maximum delay spread of the each reference signal in the reference signal set, the network device may first, according to an earliest path arrival time of a last arriving reference signal in the reference signal set and its corresponding maximum delay spread, add the earliest path arrival time of the last arriving reference signal in the reference signal set and its corresponding maximum delay spread to calculate a latest path arrival time of the reference signal. Then, the network device may, according to the latest path arrival time of the reference signal and the earliest path arrival time among all reference signals, subtract the earliest path arrival time among all reference signals from the latest path arrival time of the reference signal to obtain the comprehensive maximum delay spread $\Delta t_{max}$ of the reference signal set.

In some possible implementations, if the measurement result includes a delay spread of each reference signal in the reference signal set relative to the earliest path arrival time of the reference signal set, the network device may select a largest delay spread from delay spreads of the reference signals relative to the earliest path arrival time of the reference signal set as the comprehensive maximum delay spread $\Delta t_{max}$.

In some possible implementations, in a case where the measurement result does not satisfy a condition of the serving TRP, in order to ensure reliable communication for the terminal, the network device needs to configure the serving TRP for the terminal. Thus, the network device may determine a quality parameter of each reference signal in the reference signal set, and then select at least one TRP from the candidate TRPs as the serving TRP based on the quality parameter of each reference signal.

The condition of the serving TRP may be determined according to a protocol agreement, or preset in the network device, or may be determined by the network device according to historical data of the MIMO system and a current service situation, which is not limited in the present disclosure.

The quality parameter of the reference signal may include at least one of reference signal receiving power (RSRP), a reference signal receiving quality (RSRQ), or the like, which is not limited in the present disclosure.

For example, the condition of the serving TRP is that the comprehensive maximum delay spread $\Delta t_{max}$ of the reference signal set is less than the CP length. The reference signal set associated with each of the candidate TRPs includes: reference signal #1 associated with TRP#1, reference signal #2 associated with TRP#2, and reference signal #3 associated with TRP#3. The network device obtains the comprehensive maximum delay spread $\Delta t_{max}$ of the reference signal set from the measurement result, and compares the comprehensive maximum delay spread with the CP length.

In a case where the comprehensive maximum delay spread is less than the CP length, the measurement result satisfies the condition of the serving TRP, and the network device may determine any one or more TRPs from the candidate TRPs as the serving TRP, for example, may select TRP#1 and TRP#2 as the serving TRP group, or may select TRP#1 and TRP#3 as the serving TRP group, or may select TRP#1, TRP#2, and TRP#3 as the serving TRP group, etc.

In a case where the comprehensive maximum delay spread is greater than or equal to the CP length, it may be determined that the measurement result does not satisfy the condition of the serving TRP. Thus, the network device may compare a quality parameter corresponding to each reference signal, for example, the RSRQ. After comparison, it is found that an RSRQ corresponding to TRP#1 and an RSRQ corresponding to TRP#2 are greater than an RSRQ corresponding to TRP#3, and a comprehensive maximum delay spread corresponding to TRP#1 and a comprehensive maximum delay spread corresponding to TRP#2 are less than the CP length. Thus, at least one of TRP#1 and TRP#2 may be selected as the serving TRP.

At S503, indication information is transmitted to the terminal, in which the indication information indicates the serving TRP.

In some possible implementations, the network device may transmit the indication information to the terminal via an RRC message, or may transmit the indication information to the terminal via an MAC CE, or, may further transmit the indication information to the terminal via DCI, which is not limited in the present disclosure.

In some possible implementations, the indication information may include a TRP identifier, so that the terminal may directly determine the serving TRP based on the TRP identifier in the indication information.

In some possible implementations, the indication information transmitted by the network device to the terminal may also be a QCL identifier group. Usually, one TRP has a plurality of antenna ports, and the network device typically configures a QCL relationship for antenna ports that are located at a same or similar position. Thus, the network device may indirectly indicate the serving TRP identifier by indicating a QCL identifier group to the terminal. After receiving the QCL identifier group, the terminal may determine the serving TRP based on a relationship between the QCL identifier group and the TRP.

For example, the indication information transmitted by the network device to the terminal includes QCL identifier group 1, in which QCL identifier group 1 includes QCL#0, QCL#1, and QCL#2. Then, the terminal, by consulting a mapping relationship between a QCL identifier and the antenna port, determines that QCL#0 corresponds to antenna port #0 and antenna port #1, QCL#1 corresponds to antenna port #2 and antenna port #3, QCL#2 corresponds to antenna port #4 and antenna port #5, and simultaneously, antenna port #0 to antenna port #5 are all antenna ports in TRP#0. Then the terminal may determine that the serving TRP is TRP#0.

In some possible implementations, the indication information transmitted by the network device to the terminal may further be a reference signal identifier group. Then, the terminal may determine the serving TRP according to a correspondence between a reference signal identifier and a TRP.

For example, the indication information transmitted by the network device to the terminal includes reference signal identifier group 1, in which reference signal identifier group 1 includes reference signal #1 and reference signal #2. Then, the terminal, by consulting a mapping relationship between the reference signal identifier and the TRP, determines that reference signal #1 is associated with TRP#1, and reference signal #2 is associated with TRP#2. Then the terminal may determine that the serving TRP group is TRP#1 and TRP#2.

In some possible implementations, the network device may transmit the indication information to the terminal via any serving TRP that is determined.

In summary, the network device receives the measurement result of the reference signal set associated with the each of the candidate TRPs transmitted by the terminal, in which the measurement result includes the arrival time and/or the delay spread of the reference signal in the reference signal set, determines the serving TRP from the candidate TRPs based on the measurement result, and transmits the indication information to the terminal, in which the indication information indicates the serving TRP. Therefore, the network device may select an appropriate TRP for the terminal, which improves the performance of the MIMO system.

Refer to FIG. 6, FIG. 6 is a flowchart of a method for determining a serving TRP according to an embodiment of the present disclosure. As shown in the figure, the method is applied to interaction between a terminal and a network device. The method may include but is not limited to following steps at S601 to S605.

At S601, the network device transmits a reference signal associated with each of TRPs to the terminal via each of candidate TRPs.

At S602, the terminal determines a measurement result by measuring a reference signal in a reference signal set, in which the measurement result includes an arrival time and/or a delay spread of the reference signal in the reference signal set.

At S603, the terminal transmits the measurement result to the network device.

At S604, the network device determines a serving TRP from the candidate TRPs based on the measurement result.

At S605, the network device transmits indication information to the terminal via any serving TRP that is determined, in which the indication information indicates the serving TRP.

In summary, via simple interaction between the terminal and the network device, the network device may select an appropriate TRP for the terminal, which improves the performance of the MIMO system.

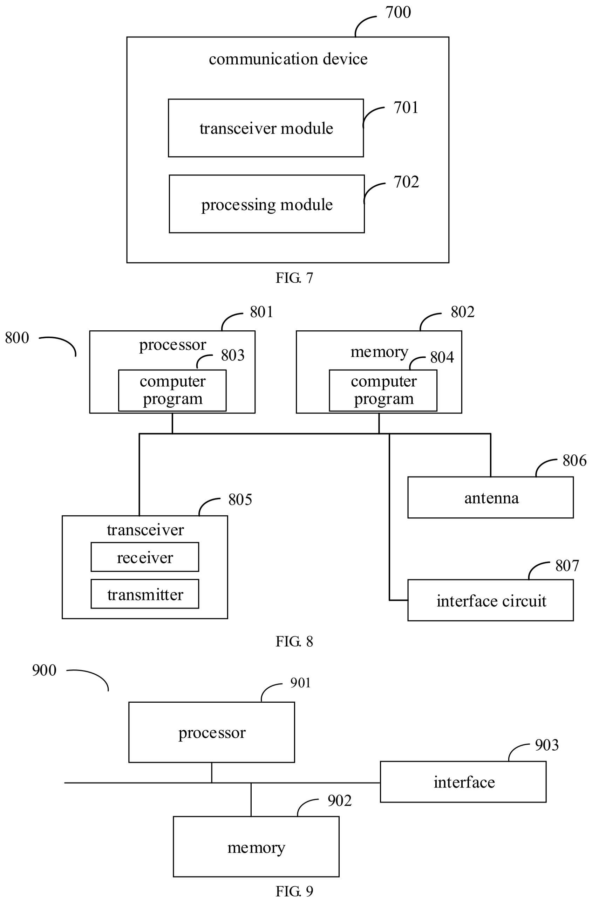

Refer to FIG. 7, FIG. 7 is a block diagram of a communication device 700 according to an embodiment of the present disclosure. The communication device 700 shown in FIG. 7 may include a transceiver module 701 and a processing module 702. The transceiver module may include a transmitting module and/or a receiving module, in which the transmitting module is configured to implement a transmitting function, and the receiving module is configured to implement a receiving function. The transceiver module may implement the transmitting function and/or the receiving function.

The communication device 700 may be a terminal, or an apparatus in a terminal, or an apparatus that may be used in conjunction with a terminal.

When the communication device 700 is on a terminal side, the processing module 702 is configured to determine a measurement result by measuring a reference signal in a reference signal set transmitted by a network device, in which the measurement result includes an arrival time and/or a delay spread of the reference signal in the reference signal set; the transceiver module 701 is configured to transmit the measurement result to the network device; the transceiver module 701 is further configured to receive indication information transmitted by the network device, in which the indication information indicates a serving TRP.

In some possible implementations, the measurement result includes any one of: an earliest path arrival time and a maximum delay spread of each reference signal; a delay spread of each reference signal relative to an earliest path arrival time of the reference signal set; or a comprehensive maximum delay spread of the reference signal set.

In some possible implementations, the transceiver module 701 is further configured to receive the indication information transmitted by the network device via any one of: an RRC message, a MAC CE, or DCI.

In some possible implementations, the indication information includes at least one of: a TRP identifier, a QCL identifier group, or a reference signal identifier group.

In summary, the terminal first measures the reference signal in the reference signal set transmitted by the network device, and determines the arrival time and/or the delay spread of the reference signal in the reference signal set. Then, the terminal transmits the measurement result to the network device, and receives the indication information indicating the serving TRP sent by the network device. Therefore, the network device may select an appropriate TRP for the terminal, which improves the performance of the MIMO system.

The communication device 700 may also be a network device, or an apparatus in a network device, or an apparatus that may be used in conjunction with a network device.

When the communication device 700 is on a network device side, the transceiver module 701 is configured to receive a measurement result of a reference signal set associated with each of candidate TRPs transmitted by a terminal, in which the measurement result includes an arrival time and/or a delay spread of a reference signal in the reference signal set; the processing module 702 is configured to determine a serving TRP from the candidate TRPs based on the measurement result; the transceiver module 701 is further configured to transmit indication information to the terminal, in which the indication information indicates the serving TRP.

In some possible implementations, the processing module 702 is further configured to: in a case that the measurement result does not satisfy a condition of the serving TRP, determine a quality parameter of each reference signal in the reference signal set; and select at least one TRP from the candidate TRPs as the serving TRP based on the quality parameter of each reference signal.

In some possible implementations, the measurement result includes any one of: an earliest path arrival time and a maximum delay spread of each reference signal; a delay spread of each reference signal relative to an earliest path arrival time of the reference signal set; or a comprehensive maximum delay spread of the reference signal set.

In some possible implementations, the transceiver module 701 is further configured to transmit the indication information to the terminal via any one of: an RRC message, a MAC CE, or DCI.

In some possible implementations, the indication information includes at least one of: a TRP identifier, a QCL identifier group, or a reference signal identifier group.

In summary, the network device receives the measurement result of the reference signal set associated with the each of candidate TRPs transmitted by the terminal, in which the measurement result includes the arrival time and/or the delay spread of the reference signal in the reference signal set. The network device determines the serving TRP from the candidate TRPs based on the measurement result. The network device transmits the indication information to the terminal, in which the indication information indicates the serving TRP. Therefore, the network device may select an appropriate TRP for the terminal, which improves the performance of the MIMO system.

Refer to FIG. 8, FIG. 8 is a block diagram of another communication device 800 according to an embodiment of the present disclosure. The communication device 800 may be a terminal, or a network device, or a chip, a chip system, or a processor that supports a terminal to implement the above method, or a chip, a chip system, or a processor that supports a network device to implement the above method. The communication device 800 may be configured to implement the method described in the above method embodiments. For details, reference may be made to the description in the above method embodiments.

The communication device 800 may include one or more processors 801. The processor 801 may be a general-purpose processor or a special-purpose processor, for example, a baseband processor or a central processing unit. The baseband processor may be used to process communication protocols and communication data, and the central processing unit may be used to control the communication device (such as a network side device, a baseband chip, a terminal, a terminal chip, a DU or a CU, etc.), execute a computer program, and process data of the computer program.

In some possible implementations, the communication device 800 may also include one or more memories 802 for storing a computer program 804. When the memory 802 executes the computer program 804, the communication device 800 is caused to implement the method in the above method embodiments. In some possible implementations, the memory 802 may also store data. The communication device 800 and the memory 802 may be set up separately or integrated together.

In some possible implementations, the communication device 800 may also include a transceiver 805 and an antenna 806. The transceiver 805 may be called a transceiving unit or a transceiving circuit, etc., to achieve a transceiving function. The transceiver 805 may include a receiver and a transmitter. The receiver may be called a receiving circuit, etc., to achieve a receiving function; and the transmitter may be called a transmitting circuit, etc., to achieve a transmitting function.

In some possible implementations, the communication device 800 includes one or more interface circuits 807. The interface circuit 807 is configured to receive code instructions and transmit the code instructions to the processor 801. When the code instructions are run by the processor 801, the communication device 800 is caused to implement the method in the above method embodiments.

In an implementation, the processor 801 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit/convey signals.

In an implementation, the processor 801 may store a computer program 803. When the computer program 803 is run on the processor 801, the communication device 800 is caused to implement the method in the above method embodiments. The computer program 803 may be solidified in the processor 801. In this way, the processor 801 may be implemented in hardware.

In an implementation, the communication device 800 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and the transceiver may also be manufactured using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a terminal, but the scope of the communication device in the present disclosure is not limited to this, and the structure of the communication device may not be restricted by FIG. 8. The communication device may be an independent device or part of a larger device. For example, the communication device may be:

(1) an independent IC, or a chip, or a chip system or a subsystem;
(2) a collection including one or more IC, optionally, an IC collection may also include storage components for storing data and a computer program;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, reference may be made to FIG. 9, which is a block diagram of a chip according to an embodiment of the present disclosure.

The chip 900 includes a processor 901 and an interface 902. There may be one or more processors 901, and there may be one or more interfaces 902.

For the case where the chip is configured to implement the function of the terminal in the embodiments of the present disclosure, an interface 903 is configured to receive code instructions and transmit the code instructions to the processor; and a processor 901 is configured to run the code instructions to implement the information synchronization method for an AI-based positioning function according to some of the above embodiments.

For the case where the chip is configured to implement the function of the transmitting end in the embodiments of the present disclosure, an interface 903 is configured to receive code instructions and transmit the code instructions to the processor; and a processor 901 is configured to run the code instructions to implement the information synchronization method for an AI-based positioning function according to some of the above embodiments.

In some possible implementations, the chip 900 further includes a memory 902 for storing necessary computer programs and data.

Those skilled in the art may also understand that various illustrative logical blocks and steps listed in the embodiments of the present disclosure may be implemented by electronic hardware, computer software, or their combination. Whether such a function is implemented by hardware or software depends on specific applications and design requirements of an overall system. Those skilled in the art may use a variety of methods to achieve the above function for each specific application, but such implementations should not be interpreted as exceeding the scope of the protection of the embodiments of the present disclosure.

The embodiments of the present disclosure further provide a communication system. The system includes the communication device as a terminal and the communication device as a network device in the above embodiment of FIG. 7, or, the system includes the communication device as a terminal and the communication device as a network device in the above embodiment of FIG. 8.

The present disclosure further provides a computer-readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, implementations may be entirely or partially implemented by software, hardware, firmware, or any combination of them. When implemented by software, the implementations may be implemented entirely or partially in the form of a computer program product. The computer program product includes one or more computer programs. Procedures or functions according to embodiments of the present disclosure are entirely or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also not to indicate an order of precedence.

The term "at least one" in the present disclosure may also be described as one or more, the term "a plurality of" may be two, three, four, or more. The term "and/or" describes the relationship between associated objects, indicating that there may be three relationships, for example, A and/or B means A alone, A and B at the same time, and B alone, in which A and B may be either singular or plural. The character "/" generally indicates that there is an "or" relationship between associated objects. "At least one of" or similar expressions refers to any combination of these enumerated items, including a single item or any combination of a plurality of items. For example, at least one of a, b, or c may represent: a, or b, or c, or a and b, or a and c, or b and c, or a, b, and c, in which a, b, and c may be singular or plural, which is not limited in the present disclosure. In the embodiment of the present disclosure, for a kind of technical feature, technical features in the kind of technical feature are distinguished by terms "first", "second", "third", "A", "B", "C" and "D", etc., and the technical features described by the terms "first", "second", "third", "A", "B", "C" and "D", etc. are not in a sequential order or in an order of size.

Correspondences indicated by tables in the present disclosure may be configured or predefined. Values of information in the tables are only examples, and may be configured as other values, which are not limited in the present disclosure. When a correspondence between information and parameters is configured, it is not always necessary to configure all correspondences indicated in tables. For example, in the tables of the present disclosure, correspondences indicated by some rows may not be configured. For another example, appropriate transformations and adjustments, such as splitting, merging, and the like may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, pre-defined, stored, pre-stored, pre-negotiated, pre-configured, solidified or pre-burned.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as exceeding the scope of the present disclosure.

Those skilled in the art may clearly understand that for a specific working process of a system, an apparatus and a unit described above, reference may be made to a corresponding process in the above method embodiments, which is not be repeated here.

The above are only implementations of the present disclosure. However, the protection scope of the present disclosure is not limited here. Any variations or substitutions that may be easily conceived by those skilled in the art shall fall within the protection scope of the present disclosure. Therefore, the protection scope of the present disclosure shall be subject to the protection scope of claims.

**Claims**

1. A method for determining a serving transmit and receive (TRP), performed by a terminal, comprising:

   determining a measurement result by measuring a reference signal in a reference signal set transmitted by a network device, wherein the measurement result comprises an arrival time and/or a delay spread of the reference signal in the reference signal set;
   transmitting the measurement result to the network device; and
   receiving indication information transmitted by the network device, wherein the indication information indicates the serving TRP.

2. The method of claim 1, wherein the measurement result comprises any one of:

   an earliest path arrival time and a maximum delay spread of each reference signal;
   a delay spread of each reference signal relative to an earliest path arrival time of the reference signal set; or
   a comprehensive maximum delay spread of the reference signal set.

3. The method of claim 1, wherein receiving the indication information transmitted by the network device comprises:
   receiving the indication information transmitted by the network device via any one of: a radio resource control (RRC) message, a medium access control (MAC) control element (CE), or downlink control information (DCI).

4. The method of any one of claims 1 to 3, wherein the indication information comprises at least one of: a TRP identifier, a quasi co-location (QCL) identifier group, or a reference signal identifier group.

5. A method for determining a serving transmit and receive point (TRP), performed by a network device, comprising:

   receiving a measurement result of a reference signal set associated with each of candidate TRPs transmitted by a terminal, wherein the measurement result comprises an arrival time and/or a delay spread of a reference signal in the reference signal set;
   determining the serving TRP from the candidate TRPs based on the measurement result; and
   transmitting indication information to the terminal, wherein the indication information indicates the serving TRP.

6. The method of claim 5, further comprising:

   in a case that the measurement result does not satisfy a condition of the serving TRP, determining a quality parameter of each reference signal in the reference signal set; and
   selecting at least one TRP from the candidate TRPs as the serving TRP based on the quality parameter of the each reference signal.

7. The method of claim 5, wherein the measurement result comprises any one of:

   an earliest path arrival time and a maximum delay spread of each reference signal;
   a delay spread of each reference signal relative to an earliest path arrival time of the reference signal set; or
   a comprehensive maximum delay spread of the reference signal set.

8. The method of claim 5, wherein transmitting the indication information to the terminal comprises:
   transmitting the indication information to the terminal via any one of: a radio resource control (RRC) message, a medium access control (MAC) control element (CE), or downlink control information (DCI).

9. The method of any one of claims 5 to 8, wherein the indication information comprises at least one of: a TRP identifier, a quasi co-location (QCL) identifier group, or a reference signal identifier group.

10. A terminal, comprising:

   a processing module, configured to determine a measurement result by measuring a reference signal in a reference signal set transmitted by a network device, wherein the measurement result comprises an arrival time and/or a delay spread of the reference signal in the reference signal set; and
a transceiver module, configured to transmit the measurement result to the network device, and receive indication information transmitted by the network device, wherein the indication information indicates a serving transmit and receive point (TRP).

11. A network device, comprising:

a transceiver module, configured to receive a measurement result of a reference signal set associated with each of candidate transmit and receive points (TRPs) transmitted by a terminal, wherein the measurement result comprises an arrival time and/or a delay spread of a reference signal in the reference signal set; and
a processing module, configured to determine a serving TRP from the candidate TRPs based on the measurement result; and
the transceiver module is further configured to transmit indication information to the terminal, wherein the indication information indicates the serving TRP.

12. A communication device, comprising a processor and a memory for storing a computer program that, when executed by the processor, cause the communication device to implement the method of any one of claims 1 to 4, or the method of any one of claims 5 to 9.

13. A communication device, comprising: a processor and an interface circuit, wherein

the interface circuit is configured to receive code instructions and transmit the code instructions to the processor; and
the processor is configured to run the code instructions to implement the method of any one of claims 1 to 4, or the method of any one of claims 5 to 9.

14. A communication system, comprising a terminal and a network device, wherein

the terminal is configured to implement the method of any one of claims 1 to 4; and
the network device is configured to implement the method of any one of claims 5 to 9.

15. A computer-readable storage medium for storing instructions that, when executed, cause the method of any one of claims 1 to 4 to be implemented, or cause the method of any one of claims 5 to 9 to be implemented.

terminal 102   network device 101

FIG. 1

| determining a measurement result by measuring a reference signal in a reference signal set transmitted by a network device, wherein the measurement result comprises an arrival time and/ or a delay spread of the reference signal in the reference signal set | 201 |

| transmitting the measurement result to the network device | 202 |

| receiving indication information transmitted by the network device, wherein the indication information indicates a serving TRP | 203 |

FIG. 2

obstacle 2

TRP#1

terminal

$t_b$

$t_a$

$t_c$

obstacle 1

FIG. 3

FIG. 4

receiving a measurement result of a reference signal set associated with each of candidate TRPs transmitted by a terminal, wherein the measurement result comprises an arrival time and/or a delay spread of a reference signal in the reference signal set

501

determining a serving TRP from the candidate TRPs based on the measurement result

502

transmitting indication information to the terminal, wherein the indication information indicates the serving TRP

503

FIG. 5

terminal

network device

At S601, the network device transmits a reference signal associated with each of TRPs to the terminal via each of candidate TRPs.

At S602, the terminal determines a measurement result by measuring a reference signal in a reference signal set, wherein the measurement result comprises an arrival time and/ or a delay spread of the reference signal in the reference signal set.

At S603, the terminal transmits the measurement result to the network device.

At S604, the network device determines a serving TRP from the candidate TRPs based on the measurement result.

At S605, the network device transmits indication information to the terminal via any serving TRP that is determined, wherein the indication information indicates the serving TRP.

FIG. 6

700

communication device

transceiver module 701

processing module 702

FIG. 7

800

801 processor

803 computer program

802 memory

804 computer program

806 antenna

805 transceiver

receiver

transmitter

807 interface circuit

FIG. 8

900

901 processor

903 interface

902 memory

FIG. 9

## INTERNATIONAL SEARCH REPORT

| International application No. |
| --- |
| **PCT/CN2023/096695** |

### A.   CLASSIFICATION OF SUBJECT MATTER

H04B 7/0413(2017.01)i

According to International Patent Classification (IPC) or to both national classification and IPC

### B.   FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS, VEN, DWPI, CNTXT, EPTXT, USTXT, JPTXT, IEEE, CNKI, 百度, BAIDU: 候选, 选择, 筛选, 最佳, 发送接收点, 发射接收点, 传输接收点, 传输点, 标识, 参考信号, 测量, 到达时间, 时延扩展, 循环前缀, 最早径, 最晚径; MIMO, transmission, reception, point, TRP, QCL, reference, signal, RS, delay, spread

### C.   DOCUMENTS CONSIDERED TO BE RELEVANT

| Category* | Citation of document, with indication, where appropriate, of the relevant passages | Relevant to claim No. |
| --- | --- | --- |
| X | CN 113965892 A (SONY CORP.) 21 January 2022 (2022-01-21)<br>claims 1-10, description, paragraphs [0010], [0062]-[0109] and [0135], and figures 3-7 | 1-15 |
| X | CN 113852429 A (HUAWEI TECHNOLOGIES CO., LTD.) 28 December 2021 (2021-12-28)<br>claims 1-18, description, paragraphs [0039]-[0083], and figures 1-7 | 1-15 |
| A | CN 112055981 A (BEIJING XIAOMI MOBILE SOFTWARE CO., LTD.) 08 December 2020<br>(2020-12-08)<br>entire document | 1-15 |
| A | US 2020100151 A1 (QUALCOMM INC.) 26 March 2020 (2020-03-26)<br>entire document | 1-15 |

☐ Further documents are listed in the continuation of Box C.        ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **31 January 2024** | **01 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/096695**

| Patent document cited in search report | | | Publication date (day/month/year) | Patent family member(s) | | | Publication date (day/month/year) |
|---|---|---|---|---|---|---|---|
| CN | 113965892 | A | 21 January 2022 | WO | 2022017303 | A1 | 27 January 2022 |
| | | | | CN | 116250267 | A | 09 June 2023 |
| | | | | US | 2023292164 | A1 | 14 September 2023 |
| CN | 113852429 | A | 28 December 2021 | None | | | |
| CN | 112055981 | A | 08 December 2020 | WO | 2022027193 | A1 | 10 February 2022 |
| | | | | CN | 112055981 | B | 15 April 2022 |
| | | | | US | 2023262480 | A1 | 17 August 2023 |
| US | 2020100151 | A1 | 26 March 2020 | US | 11122475 | B2 | 14 September 2021 |
| | | | | WO | 2020068514 | A1 | 02 April 2020 |

Form PCT/ISA/210 (patent family annex) (July 2022)